# EUROPEAN PATENT APPLICATION

(11) **EP 3 406 932 A1**
(43) Date of publication of application: **28.11.2018**
(21) Application number: 17172794.4
(22) Date of filing: 24.05.2017
(51) Int. Cl.: F16G 13/06

(54) **DRIVE CHAIN AND METHOD FOR MANUFACTURING A DRIVE CHAIN**

(71) Applicant: Miranda & Irmão Lda., 3754-909 Águeda (PT)
(72) Inventor: Tavares Miranda, João Filipe, 3754-909 Agueda (PT)
(74) Representative: Freischem & Partner Patentanwälte mbB

(57) **Abstract**

This application refers to a chain comprising an alternating succession of inner chain links (14) and outer chain links (16), each inner chain link (14) having a pair of inner link plates (18) contacting the lateral faces of two rollers (30) and each outer chain link (16) having a pair of two outer link plates (20) contacting the inner link plates (18) of adjacent inner chain links (14), wherein a pin (32) connects two outer link plates (20) and two inner link plates (18) and a roller (30).

It is an object of the invention to provide a chain with inner chain links and outer chain links that can easily and uniformly be guided on a variety of chainrings.

For this purpose, the inner surfaces (26) of a pair of opposite outer link plates (20) comprise protrusions (36) in the area between the adjacent inner link plates (18).

## Description

### Technical Field

This application relates to a drive chain, in particular a drive chain for a bicycle, comprising an alternating succession of inner chain links and outer chain links as defined by the preamble of claim 1. This application further relates to a method for manufacturing a drive chain and a bicycle comprising a drive chain.

### Background Art

Drive chains with an alternating succession of inner links and outer links are well known in the prior art. One characteristic of such chains is that the distance between opposite outer link plates is much larger than the distance between opposite inner link plates, since the outer link plates are arranged at the outer surfaces of the inner link plates.

In EP 2 602 176 A1 a chainring is described having a plurality of teeth. The plurality of teeth consists of a first group of teeth and a second group of teeth arranged alternatingly between the first group of teeth. Each tooth of the first group of teeth comprises at least a first protrusion on at least one side thereof and each tooth of the second group of teeth is free of the first protrusions. This chainring is supposed to enhance the guiding of a chain, as the first group of teeth with protrusions engages between opposite outer link plates and the second group of teeth without protrusions engages between opposite inner link plates.

A chain comprising an alternating succession of inner chain links and outer chain links is for example disclosed in US2015/0308542 A1.

### Disclosure of Invention

It is an object of the invention to provide a chain with inner chain links and outer chain links that can easily and uniformly be guided on a variety of chainrings.

The object is attained by the combination of features of independent claim 1. The dependent claims provide useful embodiments of the chain described herein.

The drive chain comprises an alternating succession of inner chain links and outer chain links, each inner chain link having a pair of inner link plates contacting the lateral faces of two rollers. Each of the outer chain links has a pair of two outer link plates contacting the inner link plates of adjacent inner chain links. Two outer link plates and two inner link plates and a roller are connected by a pin. The inner surfaces of a pair of opposite outer link plates comprise protrusions in the area between the adjacent inner link plates.

The protrusions extending from the inner surfaces of outer link plates reduce the distance between these inner surfaces of outer link plates, so that the lateral clearance between the teeth of a chainring engaging with outer links of the chain is reduced. The chain described herein improves the guidance of the teeth between the outer chain link plates on a chainring because it reduces the distance between the inner surfaces and thus the clearance of play between these surfaces and the engaging teeth. The reduced clearance between teeth engaging between pairs of outer link plates also reduces noise, which usually occurs due to lateral movement of the chain hitting the teeth.

The chain described herein can be used with a variety of chainrings. In particular it can be used with any common chainring already regularly used for bicycles having teeth of uniform width. The chain can be used in combination with chainrings having an even number of teeth or having an odd number of teeth. While a chainring with a succession of wide teeth and narrow teeth as described EP 2 602 176 A1 can only have an even number of teeth and has to be aligned to the respective wide and narrow link spaces, the chain described herein does not have to be aligned and works for odd number of teeth on a chain ring. No correlation or alignment between groups of different teeth and groups of chain links has to be performed prior to mounting the chain. A replacement of the chain is much quicker and also failure-safe compared to the replacement of a chain for a narrow and wide teeth chainring.

In one embodiment the thickness of the protrusions corresponds to at least 25 % of the thickness of the inner link plates. The thickness of the protrusions preferably is at least 70 % and most preferably 100 % of the thickness of the inner link plates. In case of 100 % of the thickness, the inner faces of the protrusions will be in the same lateral plane as the inner faces of the inner link plates so that the lateral guidance for the link plates between the outer link plates is identical to the lateral guidance between the inner link plates. Smaller thicknesses of the protrusions between 25% and 70% of the thickness of the inner link plates still provide improved guidance compared to a chain without protrusions, however not quite as tight as the thickness of 100 % in which case the distance between these protrusions is generally equal to the distance between opposite surfaces of inner link plates. The protrusions may be symmetric to the longitudinal plane of the chain extending in the middle between and parallel two opposite link plates. The guidance of the chain on the teeth of a chainring is equal for all chain links. A constant wear of inner and outer link plates as well as of the teeth contacting the inner and outer link plates can be achieved.

The distance between two opposite protrusions may be at most 70% larger than the distance between two opposite surfaces of inner link plates. However, preferably the distance between two opposite protrusions is less than 50% larger and most preferably equal to the distance between two opposite inner surfaces of inner link plates.

In practice, the thickness of the outer link plate with the protrusion is generally constant. In this case, the protrusion on the inner surface of the outer link plate corresponds to a recess on the outer surface. The outer surface of the outer link plates may comprise a trough-like recess that produces a bulge forming the protrusion on the inner surface of the outer link plate. Consequently, the protrusion adds no further weight to the outer link plate which would otherwise be necessary if the protrusion was formed as an added surface layer.

A trough-like recess and the corresponding bulge have no sharp edges but shows smooth transitions between adjacent faces. This smooth shape reduces abrasive wear to the teeth of a sprocket or chainring engaging the chain link.

In practice, the recess and the corresponding protrusion may be punched into the material of the outer link plates. Punching is a very cheap and easy method for defining a recess on the outer surface and a corresponding bulge or protrusion on the inner surface. The punching of steel link plates generally defines smooth surfaces of the trough-like recess and the bulge with smooth transition radiuses.

The three dimensional deformation of the chain link plate created by the punched protrusions and the trough-like recesses further improve the torsional strength of the outer chain links plates. Furthermore, the punching process creates a cold deformation and a cold hardning of the material of the outer link plates further increasing their hardness and stability.

Alternatively, protrusions may be realized by applying additional material to the inner surfaces of the outer link plates. In this case, the outer surface of the outer link plates remains generally flat.

In practice, the protrusions define a generally flat inner guiding surface in order to provide for a large contact area for the teeth of the chainring and a low friction guidance of the teeth. The flat guiding surfaces serve provide good lateral guidance for the tooth engaging with the respective outer chain link. In particular, with the guiding surfaces of the protrusions being are situated in the same lateral plane as the inner surfaces of the inner link plates the guidance of engaging teeth will be identical for all chain links.

In practice, the guiding surfaces of the protrusions may have a length in the longitudinal direction of the chain of at least 10% and preferably at least 50% of the longitudinal distance between two succeeding inner chain links. In this case, a tooth engaging between two opposite protrusions of a pair of outer chain links is guided over the majority of its length in the longitudinal direction. In this context the longitudinal direction corresponds to the direction defined by a line between the two axes of the pins of a chain link.

The guiding can be further improved, if the height of the guiding surface extends over at least 10% of the height of the outer link plate in the area of the protrusion. Preferably the guiding surface extends over at least 15% and more preferably over at least 20% of the height of the outer link plates. In this context the height is measured in a plane parallel to the major plane of the link plate and perpendicular to the longitudinal direction. The hight of the guiding surface has to be chosen in order to achieve a good compromise between a large guiding surface and a smooth shape of the protrusion as well as a strong longitudinal strength of the chain link plate.

The invention further relates to a method for manufacturing a chain. The method comprises the step of connecting of a pair of inner link plates and a pair of outer link plates to a roller using a pin and repeating this step so as to form an alternating succession of inner chain links and outer chain links. In another step a recess is punched into the outer surface of the outer link plates so as to define a protrusion on the inner surface of the outer link plates. While it may be possible to punch the recession into the outer link place after connecting them to at least one adjacent inner link plate, it is preferred to first form the recession and the protrusion on the outer link plates and then assemble the chain by fixing them to adjacent rollers and inner link plates. As stated above, punching is a very convenient and well controlled method for forming the protrusions on the inner surfaces of the link plates.

The invention also further relates to a bicycle comprising a chain comprising the features described above. The bicycle further comprises at least one chainring, wherein the chainring exhibits a plurality of teeth having generally identical widths in the transverse direction and engaging alternately with inner chain links and outer chain links. The chain described above provides better and more uniform guidance of the teeth between the outer chain link plates and reduces the generation of noise.

### Brief Description of Drawings

An embodiment of the chain is described below with reference to the attached drawings.
Figure 1 is a side view of a part of a chainring and an engaging portion of a chain.
Figure 2 is a top view of the chainring and chain of Fig. 1, wherein part of the figure is a sectional view according to cutting line A-A.
Figure 3 is an enlarged view of the detail III in Fig. 2 showing a portion of an outer link plate.
Figure 4 is an enlarged view of the detail IV in Fig. 1 showing a portion of an outer link plate.
Figures 5 and 6 are views corresponding to Fig. 3 and Fig. 4 of a different embodiment of the outer link plate.

### Description of Embodiments

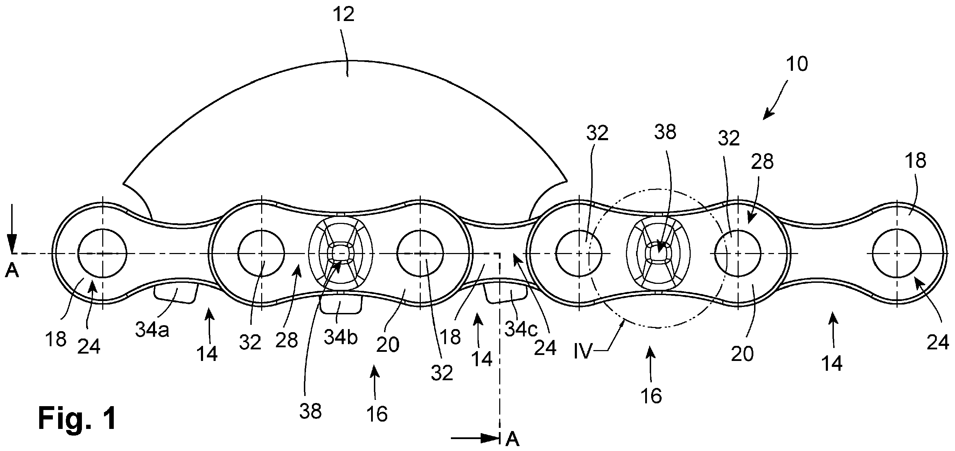

Fig. 1 shows a side view of a portion of a drive chain 10 for a bicycle and a lower part of a chainring 12 engaging the chain.

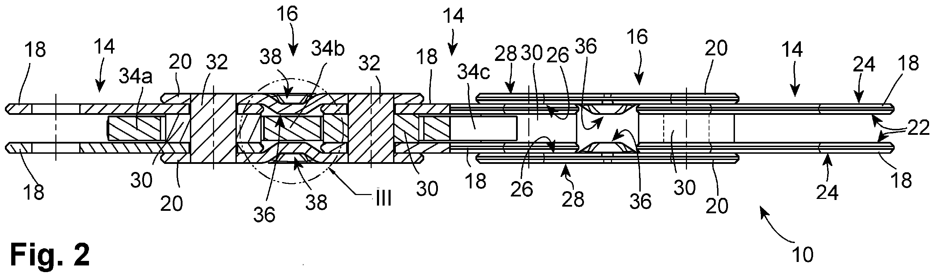

The portion of the chain 10 comprises an alternating succession of inner chain links 14 and outer chain links 16. Figures 1 - 3 show three inner chain links 14 connected by two outer chain links 16. As can be seen in Fig. 2, the inner chain links 14 each have a pair of inner link plates 18 and the outer chain links 14 each have a pair of outer link plates 20. The inner link plates 18 comprise inner surfaces 22, facing each other and outer surfaces 24. The outer link plates 20 also comprise inner surfaces 26 facing each other and outer surfaces 28.

The inner surfaces 22 of a pair of inner link plates 18 contact the lateral faces of two rollers 30 arranged in the end regions of the inner link plates 18. The inner surfaces 26 of the outer link plates 20 each contact the outer surfaces 24 of two adjacent inner link plates 18. The outer link plates 20, the inner link plates 18 and the roller 30 are connected by means of a pin 32 so that the link plates can rotate about said pin 32.

Fig. 1 shows the lower part of a chainring 12 with three teeth 34a, 34b, 34c, which engage with the chain 10. Fig. 2 shows that the teeth 34a and 34c engage with inner chain links 14 and tooth 34b engages with an outer chain link 16. Of course, the entire chainring 12 comprises further teeth distributed about its circular periphery which are cut away in the representation of Fig. 1.

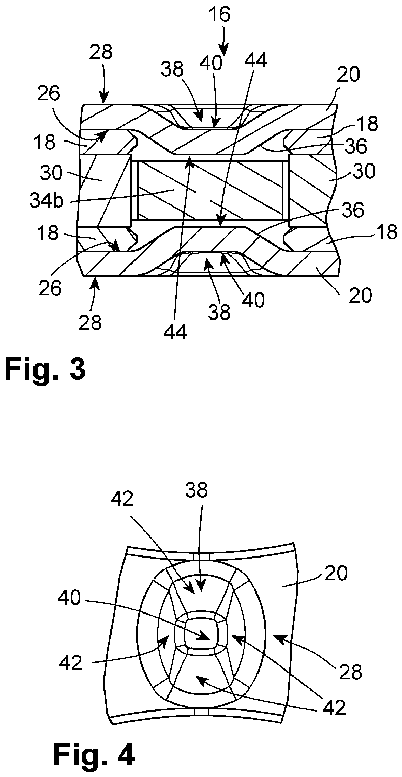

Fig. 3 shows a detailed view of tooth 34b engaging with a pair of outer link plates 18. The inner surfaces 26 of the opposite outer link plates 20 each comprise a protrusion 36 extending in the lateral (transversal) direction towards the tooth 34b between the outer link plates 20 . In the shown embodiment, the thickness of the protrusion 36 measured from the inner surface of the outer link plate 20 where it contacts the outer surface of the inner link plate 18 is equal to the thickness of the inner link plate 18. Consequently, the distance between two opposite and facing protrusions 36 on opposite outer link plates 20 is equal to the distance between the opposite inner surfaces 22 of two inner link plates 18.

The protrusions 36 extend in longitudinal direction of the chain 10 in the area between the two inner link plates 18 that are located adjacent the respective outer link plate 20 and connected to it by means of pins 32. The outer surface 28 of the outer link plates 20 comprise a trough-like recess 38 (also see Fig. 4) corresponding to the protrusion 36. The thickness of the outer link plates 20 is therefore generally constant. The trough-like recess 38 and the corresponding protrusion 36 extend over the major part of the height of the outer link plate 20.

The recess 38 is formed by punching and shows no sharp edges lines. The transition between neighboring areas of the trough-like recess 36, such as the bottom 40 of the recess 38 and the side walls 42 of the recess 38 is realized by radiuses. Also, the transition from the side walls 42 to the outer surface 28 of the outer link plate 20 adjacent to the recess 38 has a radius.

The protrusion 36 has a flat or rounded guiding surface 44 facing the tooth 34b engaging the outer chain link 16. The guiding surface 44 is generally located in the center of the protrusion 36 and extends over about 25% of the height of the protrusion 36 and 25% of the length of the protrusion 36 in the longitudinal direction, which corresponds to the line connecting the axes of the two pins 32 connected to each chain link 14,16. The shape of the guiding surface may vary from the shape shown in the drawings depending on the shape of the punch and the die used in the punching process.

Fig. 2 shows, that the clearance between the teeth 34a and 34c and the inner surface 22 of the inner link plates 18 is identical to the clearance or play between tooth 34b and the inner guiding surface of the protrusion on the inside of the outer link plates 20. Consequently, the guidance of the teeth 34a, 34b and 34c engaging the outer chain links 16 and the inner chain links 14 is of equal and uniform quality.

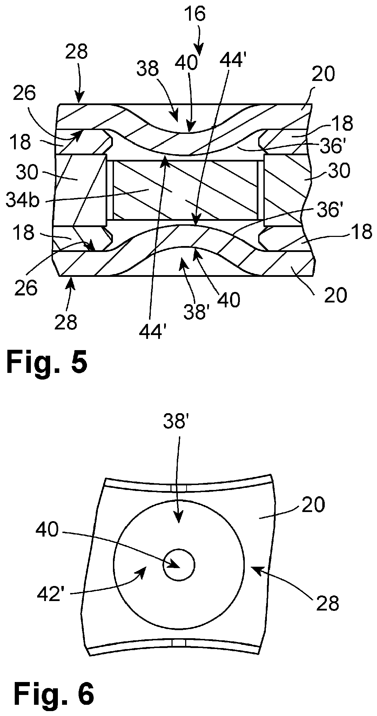

Figures 5 and 6 correspond to Figures 3 and 4 but show a different embodiment of the outer link plate 20'. Identical parts have been marked with identical reference numbers. The punch and the die used in the punching step for producing the outer link plate 20 shown in Figs. 3 and 4 have shapes that produce a flat guiding surface 44 with bends between adjacent sections of the side wall 42. By contrast, the punch used to produce the outer chain link 20' shown in Figs. 5 and 6 has a semi-spherical surface and the corresponding die has the shape of a bowl. The resulting protrusion 36' has the shape of a spherical cap with a rounded guiding surface 44' and the recess 38' has a spherical side wall 42' in the shape of a bowl. This embodiment has a smaller guiding surface 44' and consequently a smaller contact surface between the tooth and the protrusion 36'. On the other hand, it does not have any sharp edges on the surface of the protrusion 36' and consequently reduces wear of the contact surfaces and the noise during the engagement or the disengagement of the tooth 34b.

### Reference numerals

- 10: chain
- 12: chainring
- 14: inner chain link
- 16: outer chain link
- 18: inner link plate
- 20, 20': outer link plate
- 22: inner surface of inner link plate
- 24: outer surface of inner link plate
- 26: inner surface of outer link plate
- 28: outer surface of outer link plate
- 30: roller
- 32: pin
- 34a, 34b, 34c: tooth
- 36, 36': protrusion
- 38, 38': recess
- 40: bottom
- 42, 42': side wall
- 44, 44': guiding surface

## Claims

1. Chain comprising an alternating succession of inner chain links (14) and outer chain links (16), each inner chain link (14) having a pair of inner link plates (18) contacting the lateral faces of two rollers (30) and each outer chain link (16) having a pair of two outer link plates (20, 20') contacting the inner link plates (18) of adjacent inner chain links (14), wherein a pin (32) connects two outer link plates (20, 20') and two inner link plates (18) and a roller (30), **characterized in that** the inner surfaces (26) of a pair of opposite outer link plates (20, 20') comprise protrusions (36, 36') in the area between the adjacent inner link plates (18).

2. Chain according to the preceding claim, **characterized in that** the thickness of the protrusions (36, 36') corresponds to at least 25 % of the thickness of the inner link plates (18).

3. Chain according to one of the preceding claims, **characterized in that** the thickness of one outer link plate (20, 20') is generally constant.

4. Chain according to one of the preceding claims, **characterized in that** the outer surface (28) of the outer link plates (20, 20') shows a trough-like recess (38, 38') at the location of the protrusion (36, 36').

5. Chain according to one of the preceding claims **characterized in that** the recess (38, 38') and the corresponding protrusion (36, 36') is punched into the material of the outer link plates (20, 20').

6. Chain according to one of the preceding claims, **characterized in that** the protrusions (36, 36') define a generally flat or rounded inner guiding surface (44, 44').

7. Chain according to the preceding claim 6, **characterized in that** the length of the guiding surface (44, 44') extends over at least 10% of the distance between to inner chain links (18).

8. Chain according to the preceding claims 6 and 7, **characterized in that** the height of the guiding surface (44, 44') extends over at least 10% of the height of the outer link plates (20, 20') in the area of the protrusion (36, 36').

9. Method for manufacturing a chain, comprising the step of connecting of a pair of inner link plates (18) and a pair of outer link plates (20, 20') to a roller (30) using a pin (32) and repeating this step so as to form an alternating succession of inner chain links (14) and outer chain links (16), **characterized in that** recess (38, 38') is punched into the outer surface (28) of the outer link plates (20, 20') so as to define a protrusion (36, 36') on the inner surface (26) of the outer link plates (20, 20').

10. Bicycle comprising a chain (10) according to the preceding claims and at least one chainring (12), wherein the chainring (12) exhibits a plurality of teeth (34a, 34b, 34c), which show generally identical width in the transverse direction and which engage alternately with inner chain links (18) and outer chain links (20, 20') .
